# EUROPEAN PATENT APPLICATION

(11) **EP 4 283 903 A1**
(43) Date of publication of application: **29.11.2023**
(21) Application number: 21925512.2
(22) Date of filing: 24.12.2021
(51) Int. Cl.: H04L 5/00

(54) **DATA SENDING METHOD, TERMINAL DEVICE, AND COMPUTER-READABLE STORAGE MEDIUM**

(30) Priority: 09.02.2021 CN 202110179029
(71) Applicant: Huawei Technologies Co., Ltd., Shenzhen, Guangdong 518129 (CN)
(72) Inventor: JIANG, Jian, Shenzhen, Guangdong 518129 (CN); YANG, Jianhua, Shenzhen, Guangdong 518129 (CN)
(74) Representative: Huawei European IPR
(86) International application number: PCT/CN2021/141321
(87) International publication number: WO 2022/170867

(57) **Abstract**

Embodiments of this application are applicable to the field of communication technologies, and provide a data sending method, a terminal device, and a computer-readable storage medium. The terminal device cannot simultaneously send a PDU on different types of uplink carriers, and operating bands of the different types of uplink carriers are different. The data sending method includes: determining a first type of an uplink carrier carrying a PUCCH, where a type of the uplink carrier includes the first type and a second type; and sending the PDU on an uplink carrier of the first type, and skipping sending the PDU on an uplink carrier of the second type. In a scenario in which the uplink carrier of the first type and the uplink carrier of the second type cannot coexist, the terminal device selects, based on a type of an uplink carrier carrying the PUCCH, an uplink carrier for sending the PDU, and independently selects an uplink carrier based on an actual communication status, thereby improving uplink communication quality and meeting an uplink coverage requirement.

## Description

This application claims priority to Chinese Patent Application No. 202110179029.0, filed with the China National Intellectual Property Administration on February 9, 2021 and entitled "DATA SENDING METHOD, TERMINAL DEVICE, AND COMPUTER-READABLE STORAGE MEDIUM", which is incorporated herein by reference in its entirety.

### TECHNICAL FIELD

Embodiments of this application relate to the field of communication technologies, and in particular, to a data sending method, a terminal device, and a computer-readable storage medium.

### BACKGROUND

5G is a new generation mobile communication technology. Compared with earlier mobile communication technologies such as 4G, 3G, and 2G, 5G is capable of providing a higher data rate, a lower delay, and full connectivity of everything, is more energy-saving, has lower costs and higher system capacity, and supports large-scale device access.

Currently, a mainstream operating frequency of a 5G network is high, and a corresponding carrier may be referred to as a new radio (new radio, NR) carrier. In addition, uplink transmit power of a mobile phone is limited. As a result, uplink coverage of the 5G network is limited. To enhance uplink coverage of the 5G network, a supplementary uplink (supplementary uplink, SUL) is introduced. An operating frequency of the SUL carrier is lower than that of the NR carrier.

In some scenarios, the NR uplink carrier and the SUL carrier cannot coexist, and a terminal device usually uses the NR uplink carrier. In this case, SUL gains are reduced, and the uplink coverage is still limited.

### SUMMARY

Embodiments of this application provide a data sending method, a terminal device, and a computer-readable storage medium, to improve uplink communication quality, and meet an uplink coverage requirement.

According to a first aspect, a data sending method is provided, and is applied to a terminal device. The terminal device cannot simultaneously send a PDU on different types of uplink carriers, and operating bands of the different types of uplink carriers are different. The data sending method includes: determining a first type of an uplink carrier carrying a PUCCH, where the different types include the first type and a second type; and sending the PDU on an uplink carrier of the first type, and skipping sending the PDU on an uplink carrier of the second type.

According to the data sending method provided in the first aspect, in a scenario in which the uplink carrier of the first type and the uplink carrier of the second type cannot coexist, the terminal device may independently select a carrier to be rolled back based on an actual communication status. For example, the first type and the second type include an NUL and an SUL. The terminal device determines, based on the type of the uplink carrier that carries the PUCCH configured by a network, whether to ignore scheduling on the SUL or ignore scheduling on the NUL. When the NUL carrier carries the PUCCH, the SUL may be rolled back, and the PDU is sent on the NUL, thereby improving uplink communication quality, for example, increasing an uplink throughput. When the SUL carrier carries the PUCCH, the NUL may be rolled back and the PDU is sent on the SUL, thereby enhancing uplink coverage and ensuring SUL gains. In addition, sending the PDU on the uplink carrier carrying the PUCCH and rolling back other uplink carriers also ensure that sending of uplink control information is not affected.

In a possible implementation, the uplink carrier of the first type is an NUL carrier, and the uplink carrier of the second type is an SUL carrier.

In this implementation, the uplink carrier carrying the PUCCH is an NUL, and the terminal device independently choose to roll back an SUL. Usually, when signal quality of the NUL is good, a network device configures the PUCCH on the NUL. The terminal device choose to send the PDU on the NUL and not send the PDU on the SUL, thereby reserving a strongest uplink transmit bandwidth, avoiding an uplink packet loss, and improving uplink communication quality.

In a possible implementation, the uplink carrier of the first type is an SUL carrier, and the uplink carrier of the second type is an NUL carrier.

In this implementation, the uplink carrier carrying the PUCCH is an SUL, and the terminal device independently choose to roll back the NUL. Usually, when signal quality of the NUL is poor, a network device configures the PUCCH on the SUL. The terminal device sends the PDU on the SUL, and does not send the PDU on the NUL, thereby improving uplink coverage.

In a possible implementation, the terminal device includes a PHY layer, and the determining a first type of an uplink carrier carrying a PUCCH includes: The PHY layer determines the first type of the uplink carrier carrying the PUCCH.

In a possible implementation, the terminal device includes the PHY layer and a MAC layer, and the sending a PDU on the uplink carrier of the first type, and skipping sending the PDU on the uplink carrier of the second type includes: The PHY layer generates carrier indication information based on the first type and/or the second type, where the carrier indication information indicates not to send the PDU on the uplink carrier of the second type; the PHY layer sends the carrier indication information to the media access control MAC layer; the PHY layer receives uplink scheduling information sent by the network device; the PHY layer sends the uplink scheduling information to the MAC layer; and the MAC layer sends the PDU on the uplink carrier of the first type based on the carrier indication information and the uplink scheduling information, and skips sending the PDU on the uplink carrier of the second type based on the carrier indication information and the uplink scheduling information.

In this implementation, the PHY layer sends the carrier indication information to the MAC layer, to notify the MAC layer of a type of the carrier to be rolled back. The PHY layer sends, to the MAC layer, the uplink scheduling information sent by the network device, and the MAC layer performs uplink carrier scheduling based on the carrier indication information and the uplink scheduling information. This avoids sending the PDU on the carrier to be rolled back, avoids an uplink packet loss, and improves transmission quality of uplink data.

In a possible implementation, the sending, at the MAC layer, the PDU on the uplink carrier of the first type based on the carrier indication information and the uplink scheduling information, and skipping sending the PDU on the uplink carrier of the second type based on the carrier indication information and the uplink scheduling information includes: if it is determined, at the MAC layer based on the uplink scheduling information, to schedule the uplink carrier of the second type, sending a padding data packet on the uplink carrier of the second type based on the carrier indication information; and/or, if it is determined, at the MAC layer based on the uplink scheduling information, to schedule the uplink carrier of the first type, send the PDU on the uplink carrier of the first type based on the carrier indication information.

In this implementation, the padding data packet is sent on the uplink carrier of the second type, and the PDU is normally sent on the uplink carrier of the first type, to ensure that valid data can be successfully sent on the uplink carrier of the first type, and that no packet loss occurs in uplink data.

In a possible implementation, the carrier indication information further indicates to send the PDU on the uplink carrier of the first type.

In a possible implementation, the terminal device includes the PHY layer and a MAC layer, and the sending a PDU on an uplink carrier of the first type, and skipping sending the PDU on an uplink carrier of the second type includes: The PHY layer receives uplink scheduling information sent by the network device; the PHY layer parses the uplink scheduling information to obtain target uplink scheduling information for the uplink carrier of the first type; the PHY layer sends the target uplink scheduling information to the MAC layer; and the MAC layer sends the PDU on the uplink carrier of the first type based on the target uplink scheduling information.

In this implementation, the PHY layer obtains, based on the uplink scheduling information sent by the network device, the target uplink scheduling information for the uplink carrier of the first type, and sends the target uplink scheduling information to the MAC layer, and the MAC layer performs corresponding carrier scheduling based on the target uplink scheduling information. This avoids sending the PDU on a carrier to be rolled back, avoids an uplink packet loss, and simplifies implementation of the MAC layer.

In a possible implementation, the terminal device includes one PLL.

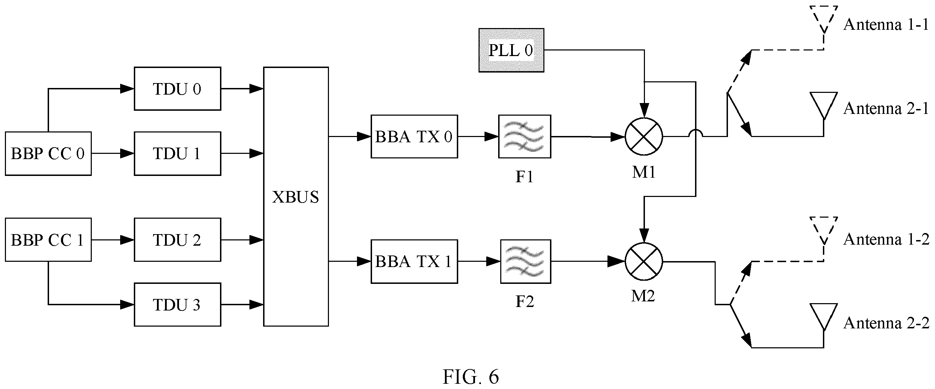

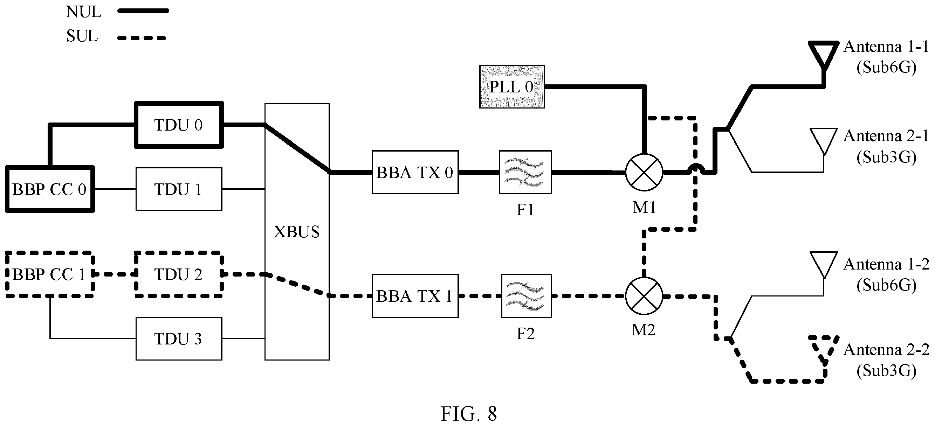

This implementation provides an application scenario of this embodiment of this application. For example, in the scenario shown in FIG. 6 or FIG. 8 in this application, the terminal device includes one PLL. When the terminal device switches between different types of uplink carriers to send data, the terminal device needs to multiplex the PLL to perform frequency switching between different uplink carriers, and a switching delay exists. The terminal device cannot simultaneously send the PDU on different types of uplink carriers within the switching delay.

In a possible implementation, the terminal device includes at least one SIM card, and each SIM card corresponds to one available data sending channel or one available PLL.

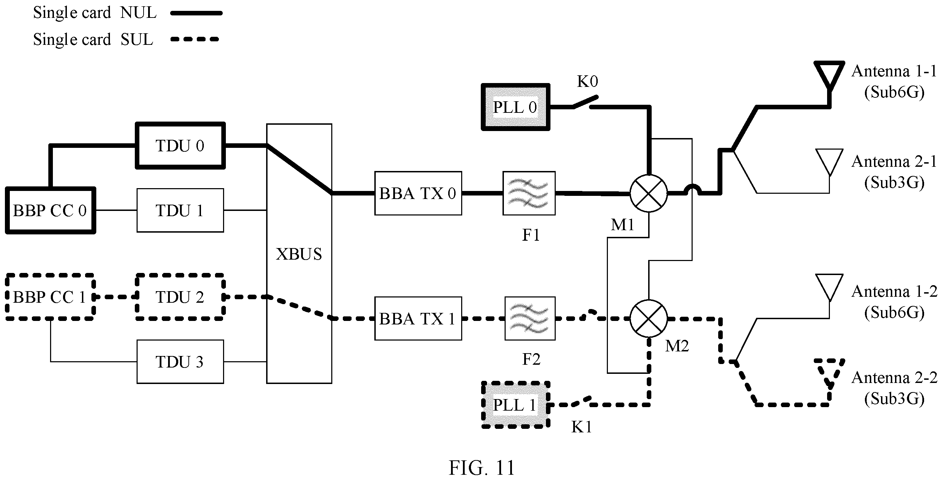

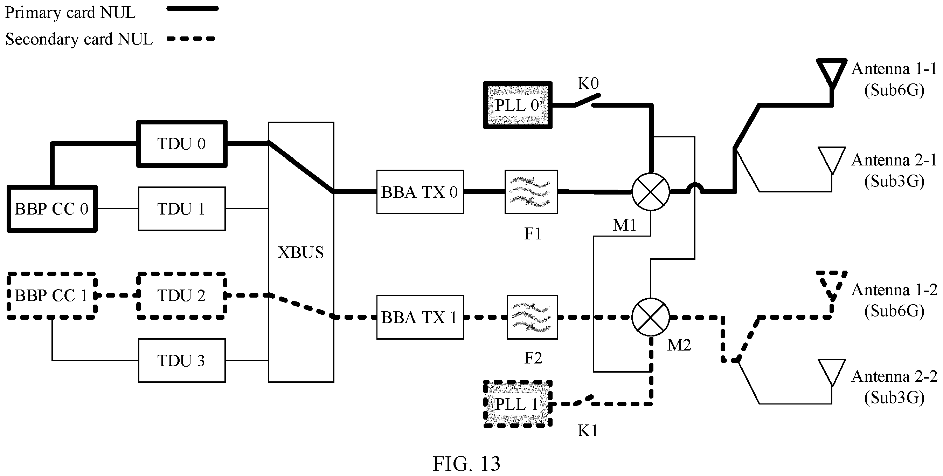

This implementation provides an application scenario of this embodiment of this application. For example, in the scenario shown in FIG. 13 of this application, each SIM card of the terminal device has only one available data transmit channel or corresponds to one available PLL. As a result, the terminal device cannot simultaneously send data PDUs of the SIM card on different types of uplink carriers. "Available" refers to a resource that can be used by one SIM card. The terminal device may include a plurality of data sending channels or a plurality of PLLs, but not all data sending channels and PLLs can be used by one SIM card. For example, in FIG. 13, the terminal device includes two data sending channels and two PLLs. A primary card corresponds to one available data sending channel and one available PLL, and a secondary card also corresponds to one available data sending channel and one available PLL. In FIG. 11, both the two data sending channels and the two PLLs included in the terminal device may be used by the primary card, and the primary card corresponds to the two available data sending channels and the two available PLLs.

In a possible implementation, before the determining a first type of an uplink carrier carrying a PUCCH, the method further includes: sending data to the network device in a downlink slot of a first carrier by using an SUL carrier, where an operating band of the first carrier is higher than an operating band of the SUL carrier.

This implementation provides an application scenario of this embodiment of this application. When the terminal device operates in a super uplink operation mode by using the SUL carrier, the terminal device cannot simultaneously send data PDUs of the SIM card on different types of uplink carriers. The first carrier is the NR carrier in this embodiment of this application.

According to a second aspect, a terminal device is provided. The terminal device cannot simultaneously send a PDU on different types of uplink carriers, and operating bands of the different types of uplink carriers are different. The terminal device includes: a processing module, configured to determine a first type of an uplink carrier carrying a PUCCH, where the different types include the first type and a second type; and a sending module, configured to send a PDU on an uplink carrier of the first type, and skip sending the PDU on an uplink carrier of the second type.

In a possible implementation, the uplink carrier of the first type is an NUL carrier, and the uplink carrier of the second type is an SUL carrier.

In a possible implementation, the uplink carrier of the first type is an SUL carrier, and the uplink carrier of the second type is an NUL carrier.

In a possible implementation, the processing module includes a physical layer module, and the physical layer module is specifically configured to determine the first type of the uplink carrier carrying the PUCCH.

In a possible implementation, the processing module includes the physical layer module and a MAC layer module, and the terminal device may further include a receiving module. The physical layer module is specifically configured to: generate carrier indication information based on the first type and/or the second type, where the carrier indication information indicates not to send the PDU on the uplink carrier of the second type, send the carrier indication information to the MAC layer module, control the receiving module to receive uplink scheduling information sent by a network device, and send the uplink scheduling information to the MAC layer module. The MAC layer module is configured to: control the sending module to send the PDU on the uplink carrier of the first type based on the carrier indication information and the uplink scheduling information, and skip sending the PDU on the uplink carrier of the second type based on the carrier indication information and the uplink scheduling information.

In a possible implementation, the MAC layer module is specifically configured to: if it is determined, based on the uplink scheduling information, to schedule the uplink carrier of the second type, control, based on the carrier indication information, the sending module to send a padding data packet on the uplink carrier of the second type; and/or if it is determined, based on the uplink scheduling information, to schedule the uplink carrier of the first type, control, based on the carrier indication information, the sending module to send the PDU on the uplink carrier of the first type.

In a possible implementation, the carrier indication information further indicates to send the PDU on the uplink carrier of the first type.

In a possible implementation, the processing module includes the physical layer module and a MAC layer module, and the terminal device may further include a receiving module. The physical layer module is specifically configured to: control the receiving module to receive uplink scheduling information sent by a network device, parse the uplink scheduling information, obtain the target uplink scheduling information for the uplink carrier of the first type, and send the target uplink scheduling information to the MAC layer module. The MAC layer module is configured to: control, based on the target uplink scheduling information, the sending module to send the PDU on the uplink carrier of the first type.

In a possible implementation, the terminal device includes one PLL.

In a possible implementation, the terminal device includes at least one SIM card, and each SIM card corresponds to one available data sending channel or one available PLL.

In a possible implementation, the sending module is further configured to send data to the network device in a downlink slot by using an SUL carrier.

According to a third aspect, a terminal device is provided. The terminal device includes a processor, and the processor is configured to: be coupled to a memory, read instructions in the memory, and enable, according to the instructions, the terminal device to perform the method provided in the first aspect.

According to a fourth aspect, a program is provided. When the program is executed by a processor, the processor is configured to perform the method provided in the first aspect.

According to a fifth aspect, a computer-readable storage medium is provided. The computer-readable storage medium stores instructions. When the instructions are run on a computer or a processor, the method provided in the first aspect is implemented.

According to a sixth aspect, a program product is provided. The program product includes a computer program, the computer program is stored in a readable storage medium, at least one processor of a device can read the computer program from the readable storage medium, and the at least one processor executes the computer program to enable the device to implement the method provided in the first aspect.

### BRIEF DESCRIPTION OF DRAWINGS

FIG. 1 is a schematic diagram of uplink and downlink coverage of an NR carrier according to an embodiment of this application;
FIG. 2 is a schematic diagram of uplink coverage of an NUL carrier and an SUL carrier according to an embodiment of this application;
FIG. 3 is a schematic diagram of a slot structure according to an embodiment of this application;
FIG. 4 is a schematic diagram of an architecture of a communication system to which an embodiment of this application is applicable;
FIG. 5 is a schematic diagram of a structure of a user plane air interface protocol stack according to an embodiment of this application;
FIG. 6 is a schematic diagram of a structure of a sending framework of a terminal device to which an embodiment of this application is applicable;
FIG. 7 is a schematic diagram of another structure of a sending framework of a terminal device to which an embodiment of this application is applicable;
FIG. 8 is a schematic diagram of an implementation of uplink carrier scheduling when a terminal device uses the sending framework in FIG. 6;
FIG. 9 is a schematic diagram of a switching delay when a PLL performs frequency switching;
FIG. 10 is a schematic diagram of uplink data scheduling in the scenario shown in FIG. 8;
FIG. 11 is a schematic diagram of an implementation of uplink carrier scheduling when a terminal device uses the sending framework in FIG. 7 and uses a single SIM card;
FIG. 12 is a schematic diagram of uplink data scheduling in the scenario shown in FIG. 11;
FIG. 13 is a schematic diagram of an implementation of uplink carrier scheduling when a terminal device uses the sending framework in FIG. 7 and uses dual SIM cards;
FIG. 14 is a schematic diagram of using an uplink carrier by a terminal device in the scenario shown in FIG. 13;
FIG. 15 is a schematic diagram of using an uplink carrier by a terminal device according to an embodiment of this application;
FIG. 16 is a schematic diagram of uplink data scheduling according to an embodiment of this application;
FIG. 17 is a schematic flowchart of a data sending method according to an embodiment of this application;
FIG. 18 is another schematic flowchart of a data sending method according to an embodiment of this application;
FIG. 19 is another schematic diagram of uplink data scheduling according to an embodiment of this application;
FIG. 20 is still another schematic flowchart of a data sending method according to an embodiment of this application;
FIG. 21 is still another schematic diagram of uplink data scheduling according to an embodiment of this application;
FIG. 22 is a schematic diagram of a structure of a terminal device according to an embodiment of this application; and
FIG. 23 is a schematic diagram of another structure of a terminal device according to an embodiment of this application.

### DESCRIPTION OF EMBODIMENTS

First, concepts in embodiments of this application are described.

### 1. NR carrier, NUL carrier, and SUL carrier

A carrier in a 5G network may have a plurality of frequencies. Usually, a mainstream operating frequency of the 5G network is high, and a corresponding carrier may be referred to as an NR carrier. Based on uplink and downlink slots of the NR carrier, a part corresponding to the uplink slot may be referred to as an NR uplink (uplink, LTL) carrier, and a part corresponding to the downlink slot may be referred to as an NR downlink (downlink, DL) carrier. The NR UL carrier is also referred to as a normal uplink (normal uplink, NUL) carrier.

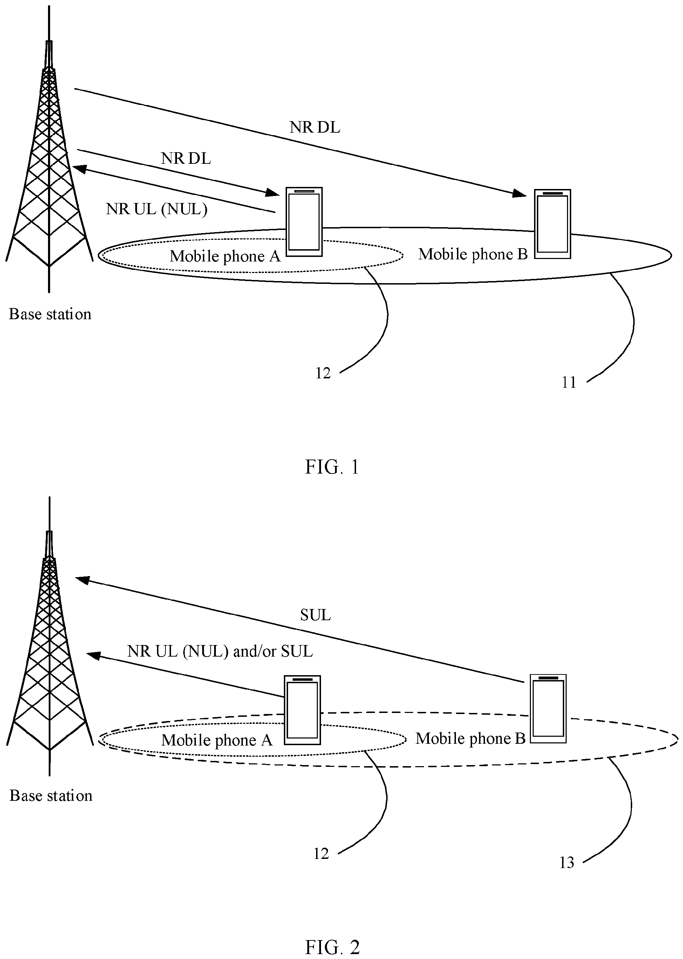

For example, FIG. 1 is a schematic diagram of uplink and downlink coverage of an NR carrier according to an embodiment of this application. As shown in FIG. 1, a mobile phone A and a mobile phone B may communicate with a base station. In a downlink direction, the base station sends data to the mobile phone A or the mobile phone B. In an uplink direction, the mobile phone A or the mobile phone B sends data to the base station. Because an operating frequency of the NR carrier is high, a path loss of signals fades quickly with an increase in a transmission distance. Transmit power of the base station is large, but transmit power of the mobile phone is limited. As a result, the uplink and downlink coverage areas of the NR carrier differ greatly. An uplink coverage area of the NUL carrier is smaller than a downlink coverage area of the NR DL carrier. For example, in FIG. 1, a signal coverage area of the NR DL carrier is marked as a range 11, a signal coverage area of the NUL carrier is marked as a range 12, and the range 12 is less than the range 11. The mobile phone A is located in the range 12, and may send data to the base station by using the NUL carrier. However, when the mobile phone B sends data to the base station by using the NUL carrier, the base station cannot receive the data sent by the mobile phone B.

To enhance uplink coverage of the 5G network, an SUL carrier is introduced based on the NUL carrier. An operating frequency of the SUL carrier is lower than that of the NUL carrier. The operating frequency is low, so that a signal path loss is small, and the uplink coverage area is large. For example, FIG. 2 is a schematic diagram of uplink coverage of an NUL carrier and an SUL carrier according to an embodiment of this application. As shown in FIG. 2, the signal coverage area of the NUL carrier is marked as a range 12, a signal coverage area of the SUL carrier is marked as a range 13, and the range 13 is greater than the range 12. The mobile phone A is located in the range 12, and may send data to the base station by using the NUL carrier and/or the SUL carrier. The mobile phone B is located in the range 13, and may send data to the base station by using the SUL carrier.

Optionally, to improve uplink communication quality, when a distance between the mobile phone and the base station is relatively short, signal quality of the NUL carrier is good, and the mobile phone may send data to the base station by using the NUL carrier. The NUL carrier has a large bandwidth. Therefore, the NUL carrier is used to transmit uplink data, increasing an uplink data throughput. Correspondingly, when the distance between the mobile phone and the base station is relatively long, signal quality of the NUL carrier becomes worse, and the mobile phone may send data to the base station by using the SUL carrier, thereby improving uplink coverage.

It should be noted that the operating frequencies of the NUL carrier and the SUL carrier are not limited in this embodiment of this application. For example, the operating frequency of the SUL carrier is a sub-3 GHz frequency band, and the sub-3 GHz frequency band is a frequency band whose frequency is lower than 3 GHz. The operating frequency of the NUL carrier is a sub-6 GHz frequency band. The sub-6 GHz frequency band is usually a frequency band with a frequency that is lower than 6 GHz and ranges from 450 MHz to 6000 MHz.

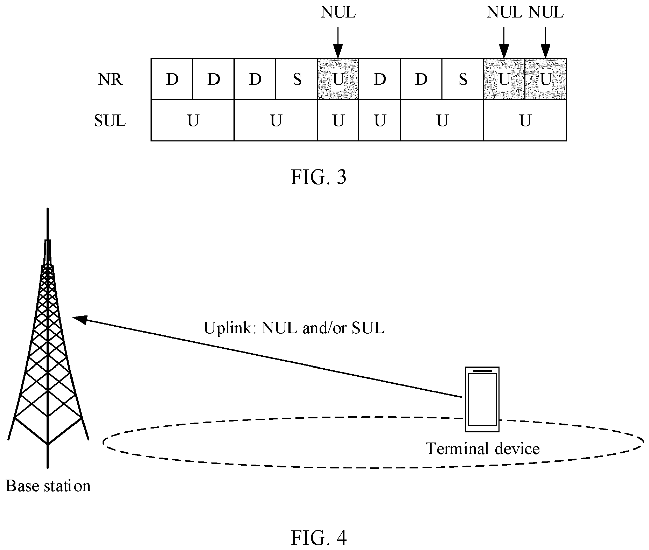

For example, FIG. 3 is a diagram of a slot structure according to an embodiment of this application. The NUL carrier performs uplink and downlink multiplexing in a TDD mode, and the SUL carrier is used for uplink. In a time division duplex (time division duplex, TDD) mode, a same frequency band is used for uplink and downlink communication, and uplink and downlink communication alternately uses an air interface channel in a time division manner. An air interface slot includes an uplink slot, a downlink slot, and a special slot. As shown in FIG. 3, an NR carrier includes five downlink slots (marked as D), three uplink slots (marked as U), and two special slots (marked as S), and a mobile phone may send data to a base station in three uplink slots. An SUL carrier is exclusively occupied by the mobile phone, and the mobile phone may send data to the base station in all subframes of the SUL carrier.

The mobile phone fully uses the uplink slot of the NUL carrier to send uplink data, and then uses the SUL carrier to send uplink data, thereby increasing an uplink bandwidth. This working mode may be referred to as super uplink.

It should be noted that FIG. 3 is merely an example, and does not limit slot structures of the NUL carrier and the SUL carrier.

It should be noted that, for ease of description, in embodiments of this application, the NUL carrier and the NUL have a same meaning, and the SUL carrier and the SUL have a same meaning.

### 2. PUCCH and PUSCH

The physical uplink control channel (physical uplink control channel, PUCCH) is used to carry uplink control information. The uplink control information includes but is not limited to a transmission format, power control information, uplink retransmission information, acknowledgment information (acknowledge, ACK), negative acknowledgment information (negative acknowledge, NACK), or the like.

The physical uplink shared channel (physical uplink shared channel, PUSCH) is mainly used to carry uplink data, for example, a protocol data unit (protocol data unit, PDU) sent by a mobile phone.

It should be noted that the PUCCH may be carried on an NUL, or may be carried on an SUL. The PUSCH may be carried on an NUL, or may be carried on an SUL. This is not limited in embodiments of this application.

### 3. A scenario in which an NUL and an SUL cannot coexist or a carrier rollback scenario

Because software and hardware configurations of mobile phones are different, in some scenarios, a terminal device cannot send data on an NUL and an SUL in a same slot or adjacent slots. This scenario may be referred to as a scenario in which the NUL and the SUL cannot coexist, or may be referred to as a carrier rollback scenario.

It should be noted that a quantity of types of uplink carriers, and a name and an operating band of each type of uplink carrier are not limited in this embodiment of this application. The carrier rollback scenario may be extended to a scenario in which the terminal device cannot simultaneously send data on different types of uplink carriers.

In this scenario, a carrier on which data cannot be sent effectively may be referred to as a carrier that needs to be rolled back, a rollback carrier, or a carrier that needs to be ignored. A specific name is not limited in this embodiment of this application.

The following describes the carrier rollback scenario by using FIG. 8 to FIG. 10 and FIG. 13 and FIG. 14 as examples.

The data sending method provided in this embodiment of this application is applicable to uplink communication between a terminal device and a base station in a communication system. The communication system includes at least two uplink carriers with different operating bands. A type of the communication system and a quantity and an operating band of uplink carriers are not limited in this embodiment of this application. Optionally, the communication system may be a 5G communication system or a subsequent evolved communication system. For example, FIG. 4 is a schematic diagram of an architecture of a communication system to which an embodiment of this application is applicable. As shown in FIG. 4, an uplink carrier may include an NUL and an SUL, and a terminal device may send data to a base station by using the NUL and/or the SUL.

It should be noted that a name and a type that are of the terminal device are not limited in this embodiment of this application. The terminal device may be alternatively referred to as a terminal, a mobile station (mobile station, MS), a mobile terminal (mobile terminal, MT), or the like, and may be a device that provides a user with voice and/or data connectivity, for example, a handheld device, a vehicle-mounted device, or the like that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote surgery (remote medical surgery), a wireless terminal in a smart grid (smart grid), a wireless terminal in transportation safety (transportation safety), a wireless terminal in a smart city (smart city), or a wireless terminal in smart home (smart home).

It should be noted that a name and a type that are of the base station are not limited in this embodiment of this application. For example, the base station may also be referred to as a network device, an access network device, or the like. Optionally, the base station may include a centralized unit (centralized unit, CU) node, a distributed unit (distributed unit, DU) node, or a device including a CU node and a DU node. Optionally, the type of the base station may include but is not limited to: a macro base station, a micro base station, a home base station (Femeto), or an access point (access point, AP).

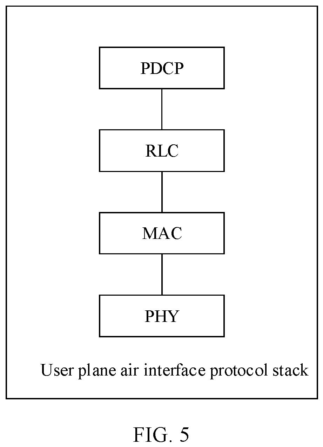

An interface between the terminal device and the base station is referred to as an air interface or an air interface. FIG. 5 is a schematic diagram of a structure of a user plane air interface protocol stack according to an embodiment of this application. As shown in FIG. 5, the user plane air interface protocol stack may include but is not limited to a packet data convergence protocol (packet data convergence protocol, PDCP) layer, a radio link control (radio link control, RLC) layer, a media access control (media access control, MAC) layer, and a physical (physical, PHY) layer. The PDCP layer may process a data unit on the user plane, for example, an internet protocol (internet protocol, IP) packet, and the PDCP layer may perform IP header compression, to reduce a quantity of bits transmitted on the air interface. The RLC layer is responsible for segmentation/concatenation, retransmission control, repetition detection, and the like. The MAC layer controls multiplexing of logical channels, retransmission of hybrid automatic repeat requests, scheduling of uplink and downlink, and the like. The MAC layer provides a service to the RLC layer through a logical channel. The PHY layer manages coding/decoding, modulation/demodulation, multi-antenna mapping, and other types of physical layer functions. The PHY layer provides a service for the MAC layer through a transport channel.

The following describes a sending framework of the terminal device to which embodiments of this application are applicable. Different sending frameworks have different manners in which the terminal device invokes the uplink carrier to send data.

Optionally, in an implementation, FIG. 6 is a schematic diagram of a structure of a sending framework of a terminal device to which an embodiment of this application is applicable. In this implementation, there is one phase lock loop (phase lock loop, PLL). As shown in FIG. 6, the sending framework includes a baseband processor (baseband processor, BBP), a time domain unit (time domain unit, TDU), a cross switch bus (cross switch bus, XBUS), a baseband analog unit (baseband analog, BBA), a PLL, a filter, a multiplier, and an antenna. The BBP is configured to perform channel coding on a data PDU. The TDU is used for time domain modulation of data. The physical layer software can configure the XBUS for switching a transmit channel. The BBA is used for up-conversion, down-conversion, filtering, and sampling rate conversion of a signal. Physical layer software can configure the PLL to perform frequency multiplication on a local oscillator signal to generate a carrier frequency clock signal.

In FIG. 6, there are four uplink transmit antennas, which are respectively marked as an antenna 1-1, an antenna 1-2, an antenna 2-1, and an antenna 2-2. Frequency bands of the antenna 1-1 and the antenna 1-2 are the same, and frequency bands of the antenna 2-1 and the antenna 2-2 are the same. A frequency band of the antenna is not limited in this embodiment of this application. For example, the frequency bands of the antenna 1-1 and the antenna 1-2 are sub-6 GHz frequency bands, and the frequency bands of the antenna 2-1 and the antenna 2-2 are sub-3 GHz frequency bands. There are two transmit channels. A BBA TX 0, a filter F1, a multiplier M1, the antenna 1-1, the antenna 2-1, and a PLL 0 form a transmit channel, which is marked as a channel 1. Similarly, a BBA TX 1, a filter F2, a multiplier M2, the antenna 1-2, the antenna 2-2, and the PLL 0 form another transmit channel, which is marked as a channel 2. It can be learned that the PLL 0 needs to be locked at operating frequencies of the channel 1 and the channel 2. When the operating frequencies of the channel 1 and the channel 2 are different, frequency switching of a PLL clock source needs to be performed.

In FIG. 6, there are two BBPs, which are respectively marked as a BBP CC 0 and a BBP CC 1, and are applied to different carriers (CC). The BBP CC 0 corresponds to a TDU 0 and a TDU 1 and is applied to a carrier CC 0. Output data of the TDU 0 and/or the TDU 1 may be input to the channel 1 or the channel 2 through channel switching by using the XBUS. Similarly, the BBP CC 1 corresponds to a TDU 2 and a TDU 3, and is applied to a carrier CC 1. Output data of the TDU 2 and/or the TDU 3 may be input to the channel 1 or the channel 2 through channel switching by using the XBUS. It should be noted that working frequencies of the CC 0 and the CC 1 may be the same or may be different. For example, both the CC 0 and the CC 1 are NUL carriers. For another example, the CC 0 is an NUL carrier, and the CC 1 is an SUL carrier.

Optionally, in a sending manner, the two transmit channels are both used for the CC 0 or the CC 1, so that uplink dual-stream sending on the CC 0 or the CC 1 can be implemented, thereby improving communication quality. For uplink dual-stream sending on the CC 0, under control of the XBUS, output data of the TDU 0 may be input to the BBA TX 0, and output data of the TDU 1 may be input to the BBA TX 1; or on the contrary, output data of the TDU 0 may be input to the BBA TX 1, and output data of the TDU 1 may be input to the BBA TX 0. The operating frequencies of the channel 1 and the channel 2 are the same, which are a frequency of the CC 0. The PLL 0 can be locked at the frequency. It is assumed that the antenna 1-1 and the antenna 1-2 correspond to the frequency. In this case, the channel 1 uses the antenna 1-1 to send data, and the channel 2 uses the antenna 1-2 to send data. Similarly, for uplink dual-stream sending on the CC 1, under control of the XBUS, output data of the TDU 2 may be input to the BBATX 0, and output data of the TDU 3 may be input to the BBA TX 1; or on the contrary, output data of the TDU 2 may be input to the BBA TX 1, and output data of the TDU 3 may be input to the BBA TX 0. The operating frequencies of the channel 1 and the channel 2 are the same, which are the frequency of the CC 1. The PLL 0 can be locked at the frequency. The channel 1 and the channel 2 transmit data by using corresponding antennas.

Optionally, in another sending manner, one transmit channel is used for transmitting of the CC 0, and the other transmit channel is used for transmitting of the CC 1. For uplink sending on the CC 0, output data of the BBP CC 0 may be input to the TDU 0 or the TDU 1, and output data of the TDU 0 or the TDU 1 may be input to the BBA TX 0 or the BBA TX 1 under control of the XBUS. Uplink sending on the CC 1 is similar to uplink sending on the CC 0, and details are not described herein. It is assumed that uplink sending on the CC 0 is implemented on the channel 1 by using the BBP CC 0, the TDU 0, and the BBA TX 0, and uplink sending on the CC 1 is implemented on the channel 2 by using the BBP CC 1, the TDU 2, and the BBA TX 1. The antenna 1-1 and the antenna 1-2 correspond to the frequency of the CC 0, and the antenna 2-1 and the antenna 2-2 correspond to a frequency of the CC 1. The operating frequency of the channel 1 is the frequency of CC 0. The PLL 0 can be locked at the frequency. The channel 1 uses the antenna 1-1 to send data. Similarly, the operating frequency of the channel 2 is the frequency of the CC 1. The PLL 0 can be locked at the frequency. The channel 2 uses the antenna 2-2 to send data. It may be understood that, if the frequencies of CC 0 and CC 1 are different, the frequency switching of a clock source of the PLL 0 needs to be performed when data is sent on the channel 0 and the channel 1.

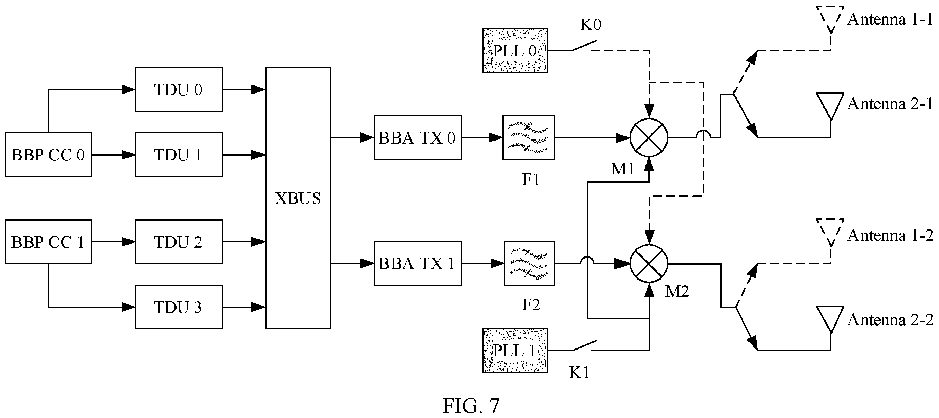

Optionally, in another implementation, FIG. 7 is a schematic diagram of another structure of a sending framework of a terminal device to which an embodiment of this application is applicable. A difference between this implementation and the implementation shown in FIG. 6 lies in a quantity of PLLs.

In FIG. 6, there is one PLL, which is marked as a PLL 0, and is used to generate carrier frequency clock signals of the channel 1 and the channel 2.

In FIG. 7, there are two PLLs, which are respectively marked as a PLL 0 and a PLL 1. The PLL 0 corresponds to a switching switch K0, and the PLL 1 corresponds to a switching switch K1. The PLL 0 may be configured to generate a carrier frequency clock signal of a channel 1, and the PLL 1 may be configured to generate a carrier frequency clock signal of a channel 2. A BBA TX 0, a filter F1, a multiplier M1, the antenna 1-1, the antenna 2-1, and the PLL 0 form a transmit channel, which is marked as the channel 1. Similarly, a BBA TX 1, a filter F2, a multiplier M2, the antenna 1-2, the antenna 2-2, and the PLL 1 form another transmit channel, which is marked as the channel 2. When the terminal device needs to perform carrier switching between the CC 0 and the CC 1, physical layer software may directly configure the PLL 0 and the PLL 1 to be respectively locked at operating frequencies of the CC 0 and the CC 1, to implement fast switching of a PLL clock source.

Based on the sending frameworks shown in FIG. 6 and FIG. 7, the following describes an application scenario in which a terminal device sends data by using different uplink carriers.

Optionally, in an application scenario, the terminal device uses the sending framework shown in FIG. 6, and uses a subscriber identity module (subscriber identity module, SIM) card. For example, FIG. 8 is a schematic diagram of an implementation of uplink carrier scheduling when the terminal device uses the sending framework in FIG. 6. The CC 0 is an NUL, and the CC 1 is an SUL. The frequency bands of the antenna 1-1 and the antenna 1-2 are sub-6 GHz frequency bands, and the frequency bands of the antenna 2-1 and the antenna 2-2 are sub-3 GHz frequency bands. As shown in FIG. 8, the BBP CC 0 is applied to the NUL carrier, outputs to-be-sent data to the BBA TX 0 by using the TDU 0 and the XBUS, and sends the data by using the antenna 1-1 on the channel 1. The BBP CC 1 is applied to the SUL carrier, outputs to-be-sent data to the BBA TX 1 by using the TDU 2 and the XBUS, and sends the data by using the antenna 2-2 on the channel 2.

Because frequencies of the NUL and the SUL are different, when the terminal device switches a carrier between the NUL and the SUL to send data, the PLL 0 needs to perform frequency switching. Refer to FIG. 2 and FIG. 3. For example, a mobile phone A works in a super uplink mode, sends uplink data in a downlink slot of an NR carrier by using an SUL carrier, and sends uplink data in an uplink slot of the NR carrier by using an NUL carrier. The mobile phone A needs to switch between the NUL carrier and the SUL carrier.

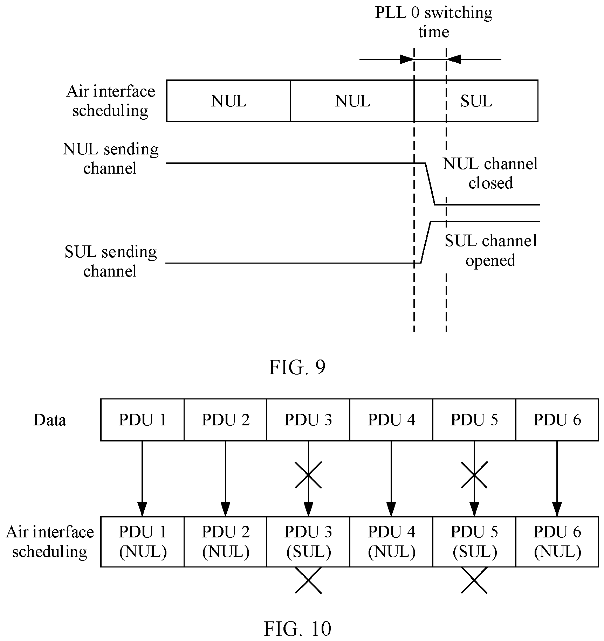

Currently, a carrier switching gap (Gap) defined in a communication standard protocol is 0 µs. However, in actual application, because PLL hardware of the terminal device is limited, there is usually only one PLL, and there is a switching delay when the PLL performs frequency switching, which cannot meet a specification in the communication standard protocol. A value of the switching delay is not limited in this embodiment of this application. For example, a typical value is 140 us. For example, switching of a terminal device from an NUL to an SUL is used as an example. FIG. 9 is a schematic diagram of a switching delay when a PLL performs frequency switching. As shown in FIG. 8 and FIG. 9, when the terminal device multiplexes the PLL 0 to perform switching between the NUL and the SUL, physical layer software needs to configure the PLL 0 to switch to output different frequencies, and provides a carrier frequency clock signal for two carriers: the NUL and the SUL through time division multiplexing. It takes 140 µs to stabilize frequency switching of the PLL 0. That is, a switching gap of at least 140 µs is required for carrier switching of the NUL and the SUL, and data cannot be normally sent during the switching gap.

It can be learned that this scenario is a carrier rollback scenario, and carrier rollback needs to be performed in the NUL and the SUL.

In this scenario, a base station normally schedules the terminal device to send data on the NUL and/or the SUL. However, because the terminal device cannot send the data during the switching gap, an implementation of the terminal device is: keeping an SUL configuration, and normally receiving scheduling performed by the base station on the NUL and/or the SUL, but the terminal device autonomously rolls back the SUL carrier. To be specific, in the carrier fallback scenario, if the terminal device receives scheduling of the NUL, the terminal device normally sends data on the NUI,; or if the terminal device receives scheduling of the SUL, the terminal device does not configure a radio frequency to send data on the SUL. As a result, a large quantity of uplink data packets scheduled on the SUL are lost, voice quality deteriorates for a voice service, and a transmission rate decreases and a bit error rate increases for a data service. In addition, because the terminal device rolls back the SUL carrier, even if the terminal device is located in an environment with poor signal quality, the terminal device can send data only on the NUL. Consequently, uplink coverage is limited, and uplink transmission performance deteriorates.

For example, FIG. 10 is a schematic diagram of uplink data scheduling in the scenario shown in FIG. 8. As shown in FIG. 10, a PDU 1, a PDU 2, a PDU 4, and a PDU 6 are expected to be sent on the NUL, and a PDU 3 and a PDU 5 are expected to be sent on the SUL. The terminal device can normally send the PDU 1, the PDU 2, the PDU 4, and the PDU 6 on the NUL. However, in the carrier rollback scenario, the terminal device does not configure a radio frequency to send the SUL. As a result, the PDU 3 and the PDU 5 are lost over an air interface.

Optionally, in an application scenario, the terminal device uses the sending framework shown in FIG. 7, and uses a SIM card. A difference between this application scenario and the application scenario shown in FIG. 8 lies in that in FIG. 8, the terminal device includes one PLL, and the PLL 0 needs to provide carrier frequency clock signals for two carriers: the SUL and the NUL through time division multiplexing, and a switching delay exists. In this application scenario, the terminal device includes two PLLs. The two PLLs may separately provide carrier frequency clock signals for the two carriers: the SUL and the NUL, and there is no switching delay.

For example, FIG. 11 is a schematic diagram of an implementation of uplink carrier scheduling when the terminal device uses the sending framework in FIG. 7 and uses a single SIM card. The CC 0 is an NUL, and the CC 1 is an SUL. The frequency bands of the antenna 1-1 and the antenna 1-2 are sub-6 GHz frequency bands, and the frequency bands of the antenna 2-1 and the antenna 2-2 are sub-3 GHz frequency bands. As shown in FIG. 11, the BBP CC 0 is applied to the NUL carrier, outputs to-be-sent data to the BBA TX 0 by using the TDU 0 and the XBUS, and sends the data by using the antenna 1-1 on the channel 1. The PLL 0 is locked at an operating frequency of the NUL carrier and provides a carrier frequency clock signal for the NUL carrier through the switch K0. The BBP CC 1 is applied to the SUL carrier, outputs to-be-sent data to the BBA TX 1 by using the TDU 2 and the XBUS, and sends the data by using the antenna 2-2 on the channel 2. The PLL 1 is locked at an operating frequency of the SUL carrier, and provides a carrier frequency clock signal for the SUL carrier through the switch K1.

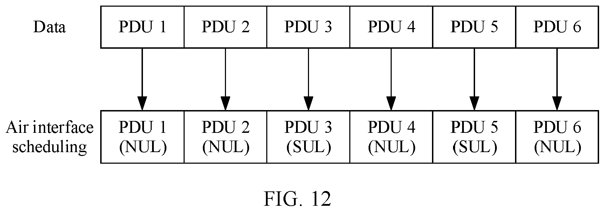

For example, FIG. 12 is a schematic diagram of uplink data scheduling in the scenario shown in FIG. 11. As shown in FIG. 12, a PDU 1, a PDU 2, a PDU 4, and a PDU 6 are expected to be sent on the NUL, and a PDU 3 and a PDU 5 are expected to be sent on the SUL. The terminal device can normally send the PDU 1, the PDU 2, the PDU 4, and the PDU 6 on the NUL, and normally send the PDU 3 and the PDU 5 on the SUL. A difference between FIG. 12 and FIG. 10 lies in that a packet loss problem exists in the carrier rollback scenario shown in FIG. 10, but no packet loss problem exists in FIG. 12.

Optionally, in still another application scenario, the terminal device uses the sending framework shown in FIG. 7, and uses two SIM cards, which are respectively referred to as a primary card and a secondary card, and is a dual-card dual-pass scenario. For example, the terminal device uses the primary card to perform a voice service, and uses the secondary card to perform a data service. For example, FIG. 13 is a schematic diagram of an implementation of uplink carrier scheduling when the terminal device uses the sending framework in FIG. 7 and uses dual SIM cards. Both the primary card and the secondary card use an NUL carrier, and both the CC 0 and the CC 1 are NUL carriers. The frequency bands of the antenna 1-1 and the antenna 1-2 are sub-6 GHz frequency bands, and the frequency bands of the antenna 2-1 and the antenna 2-2 are sub-3 GHz frequency bands. As shown in FIG. 13, the BBP CC 0 is applied to an NUL carrier of the primary card, outputs to-be-sent data to the BBA TX 0 by using the TDU 0 and the XBUS, and sends the data by using the antenna 1-1 on the channel 1. The BBP CC 1 is applied to an NUL carrier of the secondary card, outputs to-be-sent data to the BBA TX 1 by using the TDU 2 and the XBUS, and sends the data by using the antenna 1-2 on the channel 2. The PLL 0 can be locked at an operating frequency of the NUL carrier to provide a carrier frequency clock signal for the NUL carrier of the primary card. The PLL 1 can be locked at an operating frequency of the NUL carrier to provide a carrier frequency clock signal for the NUL carrier of the secondary card.

A similarity between this scenario and the scenario shown in FIG. 11 lies in that the sending frameworks of the terminal devices are the same.

A difference between this scenario and the scenario shown in FIG. 11 lies in that FIG. 11 shows a single-card scenario, and the two transmit channels are respectively applied to the NUL carrier and the SUL carrier of the single card. However, this scenario is a dual-card dual-pass scenario, and the two transmit channels are respectively applied to the NUL carrier of the primary card and the uplink carrier of the secondary card. The secondary card occupies one transmit channel. As a result, the primary card can use only one transmit channel. An SUL carrier of the primary card has no available radio frequency resources, and the primary card cannot send data through the SUL.

It can be learned that, in this scenario, a radio frequency resource used by the SUL of the primary card conflicts with a radio frequency resource used by the NUL of the secondary card, and the NUL and the SUL of the primary card cannot coexist. This scenario is a carrier rollback scenario, and carrier rollback needs to be performed on the primary card in the NUL and the SUL.

In this scenario, an implementation of the terminal device is as follows: When determining that carrier rollback needs to be performed on the primary card, the terminal device rolls back the SUL carrier, triggers a detach (Detach) operation and a re-attach (Re-Attach) operation, and updates a carrier capability. However, the detach/re-attach operation needs to interrupt a current service, and a problem such as a call drop or network access interruption occurs, which deteriorates user experience.

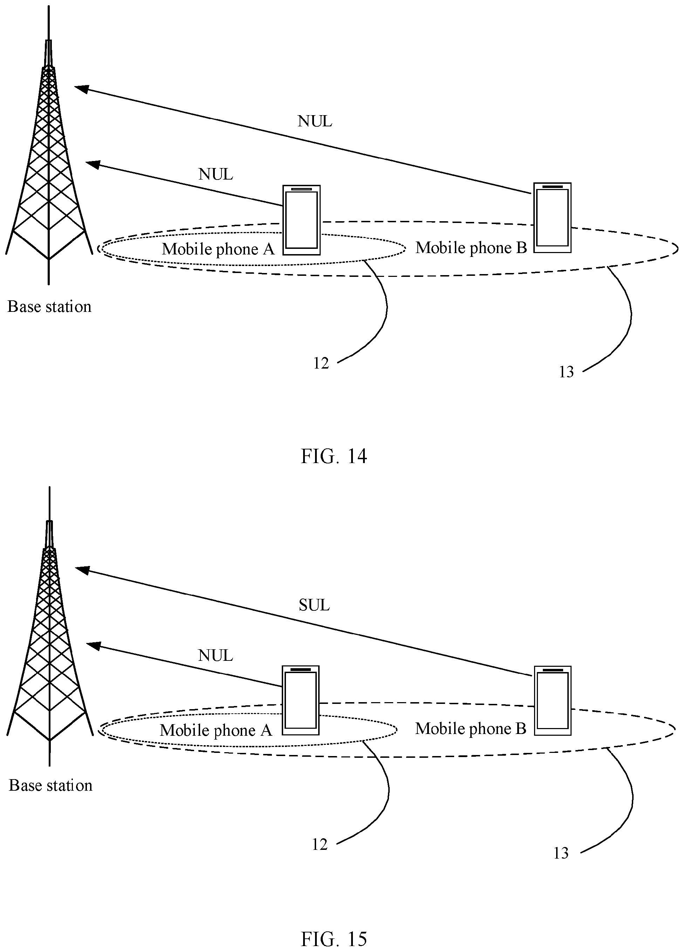

In addition, currently, there is a limitation on carrier rollback. The NUL needs to be reserved, and the terminal device can roll back only the SUL. Even if the terminal device is located in an environment with poor signal quality, the terminal device can send data only on the NUL. Consequently, uplink coverage is limited, and uplink transmission performance deteriorates. For example, FIG. 14 is a schematic diagram of using an uplink carrier by the terminal device in the scenario shown in FIG. 13. As shown in FIG. 14, for a mobile phone B, after an SUL is rolled back in a weak field, data is sent on an NUL, which is equivalent to a loss of a gain of the SUL. Consequently, uplink communication performance of the mobile phone B deteriorates. For a range 12 and a range 13, refer to FIG. 2. Details are not described herein again.

The data sending method provided in this embodiment of this application is applied to a carrier rollback scenario. The terminal device may choose, based on an actual communication status, to perform carrier rollback on an NUL or perform carrier rollback on an SUL. When an uplink communication environment in which the terminal device is currently located is not good, the terminal device may choose to roll back the NUL, and send data on the SUL, thereby enhancing uplink coverage and avoiding an uplink packet loss. When the uplink communication environment in which the terminal device is currently located is good, the terminal device may choose to roll back the SUL, and send data on the NUL, to reserve a strongest uplink transmit bandwidth, thereby avoiding an uplink packet loss and improving uplink communication quality.

For example, FIG. 15 is a schematic diagram of using an uplink carrier by the terminal device according to an embodiment of this application. A difference between FIG. 15 and FIG. 14 lies in that In FIG. 15, according to the data sending method provided in this embodiment, the mobile phone B may roll back an NUL in the weak field, and send uplink data on the SUL, thereby enhancing uplink coverage.

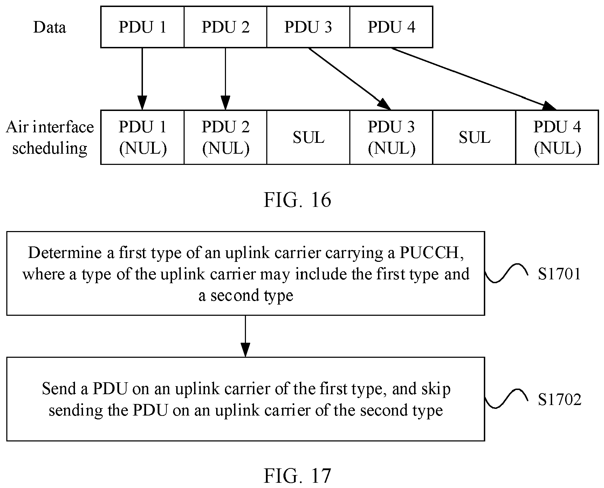

For example, FIG. 16 is a schematic diagram of uplink data scheduling according to an embodiment of this application. It is assumed that the terminal device rolls back the SUL, and sends data on the NUL. A difference between FIG. 16 and FIG. 10 lies in that In FIG. 16, according to the data sending method provided in this embodiment, the terminal device may normally send the PDU 1 to the PDU 4 on the NUL, and no packet loss occurs on an air interface.

The following describes the technical solutions of this application in detail with reference to specific embodiments. The following embodiments may be combined with each other, and a same or similar concept or process may not be described repeatedly in some embodiments.

Embodiments of this application may be combined with each other, and a same or similar concept or process may not be described repeatedly in some embodiments. The terms "first", "second", "third", "fourth", and the like (if any) in embodiments of this application are intended to distinguish between similar objects but do not necessarily indicate a specific order or sequence.

FIG. 17 is a schematic flowchart of a data sending method according to an embodiment of this application. The data sending method provided in this embodiment is executed by a terminal device. The terminal device cannot simultaneously send data on different types of uplink carriers, and operating bands of the different types of uplink carriers are different. As shown in FIG. 17, the data sending method provided in this embodiment of this application may include the following steps.

S1701: Determine a first type of an uplink carrier carrying a PUCCH.

A type of the uplink carrier may include the first type and a second type.

For example, in embodiments of this application, an example in which the type of the uplink carrier includes an NUL and an SUL is used for description.

Specifically, the PUCCH is used to carry uplink control information, and is configured by a network device. To ensure uplink communication quality between the network device and a terminal device, the network device usually configures the PUCCH on an uplink carrier with good communication quality. For example, as shown in FIG. 15, when the terminal device is close to a base station, for example, a mobile phone A, communication quality of an NUL is good, and the base station configures the PUCCH on the NUL. When a distance between the terminal device and the base station is long, for example, a mobile phone B, communication quality of an NUL becomes worse, uplink coverage of an SUL is stronger, and the base station configures the PUCCH on the SUL.

Optionally, the determining a first type of an uplink carrier carrying a PUCCH may include:
determining, at a PHY layer, the first type of the uplink carrier carrying the PUCCH.

S1702: Send a PDU on an uplink carrier of the first type, and skip sending the PDU on an uplink carrier of the second type.

Optionally, in an implementation, the first type is an NUL, and the second type is an SUL. The terminal device sends the PDU on the NUL, and does not send the PDU on the SUL.

In this implementation, the terminal device performs SUL carrier rollback. The terminal device autonomously ignores scheduling performed by the network device on the SUL carrier, and schedules only an NUL carrier with good uplink communication quality to send data, thereby avoiding a problem that a packet loss occurs when the terminal device sends data on the SUL carrier based on a network configuration. In addition, a strongest uplink transmit bandwidth is reserved, and uplink communication quality is improved.

Optionally, in another implementation, the first type is an SUL, and the second type is an NUL. The terminal device sends a PDU on the SUL, and does not send the PDU on the NUI,.

In this implementation, the terminal device performs NUL carrier rollback. The terminal device autonomously ignores scheduling performed by the network device on the NUL carrier, and schedules only an SUL carrier with good uplink coverage to send data, thereby improving uplink coverage.

It can be learned that according to the data sending method provided in this embodiment, the terminal device may independently select a carrier to be rolled back based on an actual communication status. The terminal device determines, based on the type of the uplink carrier that carries the PUCCH configured by a network, whether to ignore scheduling on the SUL or ignore scheduling on the NUL. When the NUL carrier carries the PUCCH, the SUL may be rolled back, and the PDU is sent on the NUL, thereby improving uplink communication quality, for example, increasing an uplink throughput. When the SUL carrier carries the PUCCH, the NUL may be rolled back, and the PDU is sent on the SUL, thereby enhancing uplink coverage and ensuring SUL gains.

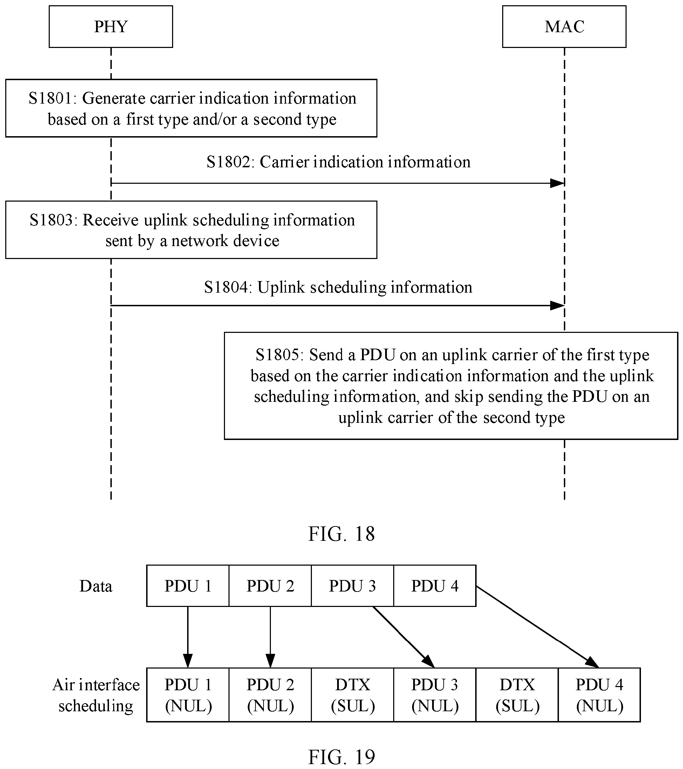

Optionally, based on the embodiment shown in FIG. 17, FIG. 18 is another schematic flowchart of the data sending method according to this embodiment of this application, and provides an implementation of S1702. As shown in FIG. 18, in S1702, the sending a PDU on an uplink carrier of the first type, and skipping sending the PDU on an uplink carrier of the second type may include the following steps.

S1801: Generate carrier indication information at the PHY layer based on the first type and/or the second type.

The carrier indication information indicates any one of the following: not sending the PDU on the uplink carrier of the second type, or sending the PDU on the uplink carrier of the first type, or sending the PDU on the uplink carrier of the first type and not sending the PDU on the uplink carrier of the second type.

It should be noted that a name of the carrier indication information is not limited in this embodiment. For example, the carrier indication information may alternatively be referred to as a rollback carrier indication.

Specifically, in a process of sending uplink data, the PHY layer software may configure a PLL to perform frequency multiplication on a local oscillator signal to generate a carrier frequency clock signal. The PHY layer may determine, based on a hardware configuration of the terminal device, whether a current scenario is a carrier rollback scenario, determine, based on the type of the uplink carrier that carries the PUCCH, a carrier that needs to be rolled back, and generate the carrier indication information.

S1802: Send, at the PHY layer, the carrier indication information to a MAC layer.

Correspondingly, the carrier indication information sent by the PHY layer is received at the MAC layer. The MAC layer may determine, based on the carrier indication information, an uplink carrier to be rolled back and an uplink carrier that needs to be scheduled.

S1803 : Receive, at the PHY layer, uplink scheduling information sent by the network device.

Specifically, the network device may schedule the terminal device to send data on the uplink carrier, and the network device sends the uplink scheduling information to the terminal device. Correspondingly, the terminal device receives the uplink scheduling information. According to a protocol layer structure, the terminal device first receives the uplink scheduling information at the PHY layer, and then the PHY layer may send the uplink scheduling information to the MAC layer.

Optionally, the uplink scheduling information may be used to indicate the terminal device to send data on the NUL and/or send data on the SUL.

S1804: Send, at the PHY layer, the uplink scheduling information to the MAC layer.

In this embodiment, the PHY layer does not need to determine whether the uplink scheduling information is for the NUL or the SUL. After receiving the uplink scheduling information, the PHY layer sends the uplink scheduling information to the MAC layer. Subsequently, the MAC layer determines how to schedule the uplink carrier.

S1805: Send, at the MAC layer, the PDU on the uplink carrier of the first type based on the carrier indication information and the uplink scheduling information, and skip sending the PDU on the uplink carrier of the second type based on the carrier indication information and the uplink scheduling information.

It can be learned that according to the data sending method provided in this embodiment, the PHY layer sends the carrier indication information to the MAC layer, to notify the MAC layer of a type of the carrier to be rolled back. The PHY layer sends, to the MAC layer, the uplink scheduling information sent by the network device, and the MAC layer performs uplink carrier scheduling based on the carrier indication information and the uplink scheduling information, sends the PDU on the uplink carrier of the first type that carries the PUCCH, and does not send the PDU on the uplink carrier of the second type. This avoids sending the PDU on the carrier to be rolled back, avoids an uplink packet loss, and improves transmission quality of uplink data.

Optionally, in S1805, the sending, at the MAC layer, the PDU on the uplink carrier of the first type based on the carrier indication information and the uplink scheduling information, and skipping sending the PDU on the uplink carrier of the second type based on the carrier indication information and the uplink scheduling information may include:
if it is determined, at the MAC layer based on the uplink scheduling information, to schedule the uplink carrier of the second type, sending a padding (padding) data packet on the uplink carrier of the second type based on the carrier indication information; and/or
if it is determined, at the MAC layer based on the uplink scheduling information, to schedule the uplink carrier of the first type, sending the PDU on the uplink carrier of the first type based on the carrier indication information.

The padding data packet may be any invalid data, and specific data included in the padding data packet is not limited in this embodiment. For example, the data packet may be a padding data packet defined in a communication protocol, or all-zero data of a preset bit length.

It can be learned that the padding data packet is sent on the uplink carrier of the second type, and the PDU is normally sent on the uplink carrier of the first type, to ensure that valid data can be successfully sent on the uplink carrier of the first type, and that no packet loss occurs in uplink data, thereby improving uplink communication quality.

For example, FIG. 19 is another schematic diagram of uplink data scheduling according to an embodiment of this application. It is assumed that the PUCCH configured by the network device is carried on the NUL, and the terminal device determines to roll back the SUL. As shown in FIG. 19, the MAC layer normally sends a PDU 1 to a PDU 4 on the NUL, and sends the padding data packet on the SUL. A data collection tool may be used to capture packets over an air interface, find a location of an SUL slot for discontinuous transmission (discontinuous transmission, DTX), and determine that sequence numbers of PDU packets sent on the NUL carrier before and after the SUL slot are continuous, for example, the PDU 1 to the PDU 4. In this way, no packet is lost, thereby improving uplink data transmission performance.

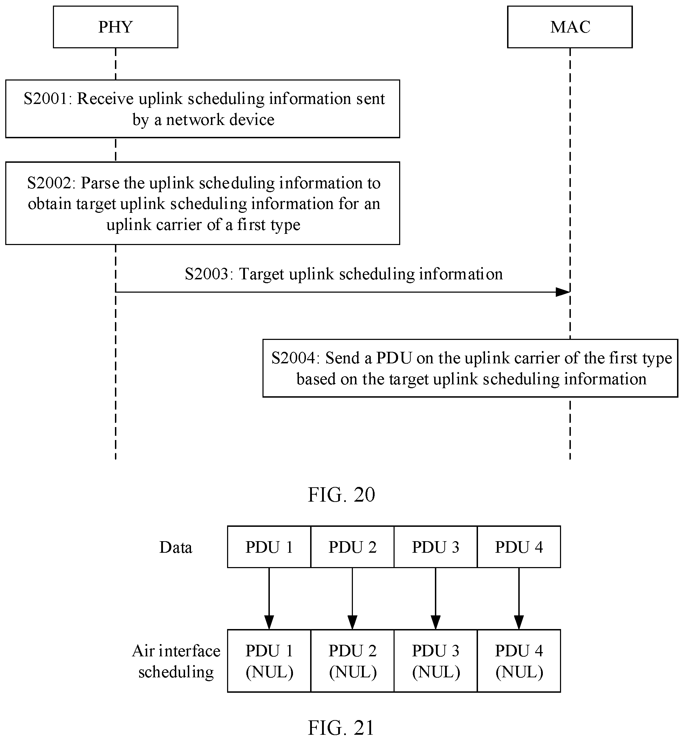

Optionally, based on the embodiment shown in FIG. 17, FIG. 20 is still another schematic flowchart of the data sending method according to this embodiment of this application, and provides an implementation of S1702. As shown in FIG. 20, in S1702, the sending a PDU on an uplink carrier of the first type, and skipping sending the PDU on an uplink carrier of the second type may include the following steps.

S2001: Receive, at the PHY layer, uplink scheduling information sent by the network device.

A principle is similar to that of S 1803, and details are not described herein again.

S2002: Parse the uplink scheduling information at the PHY layer to obtain target uplink scheduling information for the uplink carrier of the first type.

In this embodiment, the PHY layer parses the uplink scheduling information, and identifies uplink scheduling information of the uplink carrier of the first type that needs to be scheduled by the terminal device and uplink scheduling information of the uplink carrier of the second type that is ignored by the terminal device for scheduling. For ease of description, the uplink scheduling information of the uplink carrier of the first type may be referred to as the target uplink scheduling information.

S2003: Send the target uplink scheduling information to the MAC layer at the PHY layer.

Correspondingly, the target uplink scheduling information sent by the PHY layer is received at the MAC layer.

S2004: Send, at the MAC layer, the PDU on the uplink carrier of the first type based on the target uplink scheduling information.

It can be learned that, according to the data sending method provided in this embodiment, the PHY layer obtains, based on the uplink scheduling information sent by the network device, the target uplink scheduling information for the uplink carrier of the first type that is scheduled by the terminal device, and sends the target uplink scheduling information to the MAC layer, and the MAC layer performs corresponding carrier scheduling based on the target uplink scheduling information. This avoids sending the PDU on a carrier to be rolled back, avoids an uplink packet loss, and simplifies processing at the MAC layer.

For example, FIG. 21 is still another schematic diagram of uplink data scheduling according to an embodiment of this application. It is assumed that the PUCCH configured by the network device is carried on the NUL, and the terminal device determines to roll back the SUL. As shown in FIG. 21, the MAC layer schedules only the NUL based on the target uplink scheduling information sent by the PHY layer, normally sends the PDU 1 to the PDU 4 on the NUL, and does not schedule the SUL. A data collection tool may be used to capture packets over an air interface and determine that sequence numbers of PDU packets sent on the NUL carrier are consecutive, for example, the PDU 1 to the PDU 4. In this way, no packet is lost, thereby improving uplink data transmission performance.

A difference between FIG. 21 and FIG. 19 lies in that In FIG. 19, the uplink scheduling information received at the MAC layer is sent by the network device, and the network device may schedule the uplink carrier of the second type that is ignored by the terminal device for scheduling. The MAC layer normally schedules the uplink carrier of the second type, and the sent data is a padding data packet. In FIG. 21, the target uplink scheduling information received by the MAC layer is obtained after the PHY layer performs identification processing on the uplink scheduling information sent by the network device, and the target uplink scheduling information is specific to only the uplink carrier of the first type that needs to be scheduled by the terminal device. Implementation of the MAC layer is simpler.

It may be understood that, to implement the foregoing functions, the terminal device includes corresponding hardware and/or software modules for performing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of this application.

In embodiments of this application, the terminal device may be divided into function modules based on the foregoing method examples, for example, each function module may be obtained through division based on each corresponding function, or two or more functions may be integrated into one module. It should be noted that, in embodiments of this application, module division is an example, and is merely a logical function division. During actual implementation, another division manner may be used. It should be noted that a name of a module in embodiments of this application is an example, and the name of the module is not limited during actual implementation.

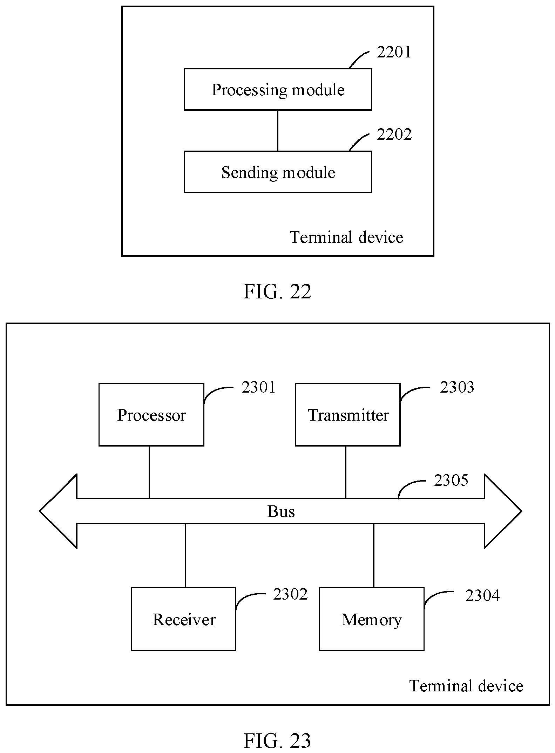

For example, FIG. 22 is a schematic diagram of a structure of a terminal device according to an embodiment of this application. As shown in FIG. 22, the terminal device provided in this embodiment cannot simultaneously send a PDU on different types of uplink carriers, and operating bands of the different types of uplink carriers are different. The terminal device provided in this embodiment may include:
a processing module 2201, configured to determine a first type of an uplink carrier carrying a PUCCH, where the different types include the first type and a second type.
a sending module 2202, configured to send a PDU on an uplink carrier of the first type, and skip sending the PDU on an uplink carrier of the second type.

Optionally, the uplink carrier of the first type is an NUL carrier, and the uplink carrier of the second type is an SUL carrier.

Optionally, the uplink carrier of the first type is an SUL carrier, and the uplink carrier of the second type is an NUL carrier.

Optionally, the processing module 2201 may include a physical layer module, and the physical layer module is specifically configured to:
determine the first type of the uplink carrier carrying the PUCCH.

Optionally, the processing module 2201 may include the physical layer module and a MAC layer module, and the terminal device may further include a receiving module.

The physical layer module is specifically configured to:
generate carrier indication information based on the first type and/or the second type, where the carrier indication information indicates not to send the PDU on the uplink carrier of the second type;
send the carrier indication information to the MAC layer module;
control the receiving module to receive uplink scheduling information sent by a network device; and
send the uplink scheduling information to the MAC layer module.

The MAC layer module is configured to: control the sending module 2202 to send the PDU on the uplink carrier of the first type based on the carrier indication information and the uplink scheduling information, and skip sending the PDU on the uplink carrier of the second type based on the carrier indication information and the uplink scheduling information.

Optionally, the MAC layer module is specifically configured to:
if it is determined, based on the uplink scheduling information, to schedule the uplink carrier of the second type, control, based on the carrier indication information, the sending module 2202 to send a padding data packet on the uplink carrier of the second type; and/or
if it is determined, based on the uplink scheduling information, to schedule the uplink carrier of the first type, control, based on the carrier indication information, the sending module 2202 to send the PDU on the uplink carrier of the first type.

Optionally, the carrier indication information further indicates to send the PDU on the uplink carrier of the first type.

Optionally, the physical layer module is specifically configured to:
control the receiving module to receive uplink scheduling information sent by a network device; and
parse the uplink scheduling information to obtain target uplink scheduling information for the uplink carrier of the first type; and
send the target uplink scheduling information to the MAC layer module.

The MAC layer module is configured to: control, based on the target uplink scheduling information, the sending module 2202 to send the PDU on the uplink carrier of the first type.

Optionally, the terminal device includes one PLL.

Optionally, the terminal device includes at least one SIM card, and each SIM card corresponds to one available data sending channel or one available PLL.

Optionally, the sending module 2202 is further configured to:
send data to the network device in a downlink slot by using an SUL carrier.

The terminal device provided in this embodiment may perform the data sending method provided in embodiments of this application. Technical principles and technical effects are similar, and details are not described herein again.

FIG. 23 shows another structure of the terminal device according to an embodiment of this application. The terminal device includes a processor 2301, a receiver 2302, a transmitter 2303, a memory 2304, and a bus 2305. The processor 2301 includes one or more processing cores. The processor 2301 runs a software program and a module, to execute various function applications and perform information processing. The receiver 2302 and the transmitter 2303 may be implemented as a communication component, and the communication component may be a baseband chip. The memory 2304 is connected to the processor 2301 through the bus 2305. The memory 2304 may be configured to store at least one program instruction, and the processor 2301 is configured to execute the at least one program instruction, to implement the technical solutions in the foregoing embodiments. Implementation principles and technical effects thereof are similar to those of the foregoing method embodiments, and details are not described herein again.

After the terminal is powered on, the processor can read a software program in the memory, interpret and execute instructions of the software program, and process data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal, the control circuit receives a radio frequency signal through the antenna, converts the radio frequency signal into a baseband signal, and outputs the baseband signal to the processor. The processor converts the baseband signal into data, and processes the data.

Persons skilled in the art may understand that for ease of description, FIG. 23 shows only one memory and only one processor. In a real terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. Persons skilled in the art may understand that the baseband processor and the central processing unit may be integrated into one processor, or may be independent processors, and are connected by using a bus or the like. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function. The memory may be integrated into the processor, or may be independent of the processor. The memory includes a cache cache, and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction structure or a data structure and that can be accessed by a computer, but is not limited thereto.

The memory in embodiments of this application may alternatively be a circuit or any other apparatus that can implement a storage function, and is configured to store the program instructions and/or the data. All or a part of the method provided in the embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a terminal, the terminal is enabled to implement the technical solutions in the foregoing embodiments. Implementation principles and technical effects thereof are similar to those of the foregoing related embodiments, and details are not described herein again.

An embodiment of this application provides a computer-readable storage medium, where the computer-readable storage medium stores program instructions. When the program instructions are executed by a terminal, the terminal is enabled to perform the technical solutions in the foregoing embodiments. Implementation principles and technical effects thereof are similar to those of the foregoing related embodiments, and details are not described herein again. In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A data sending method, applied to a terminal device, wherein the terminal device cannot simultaneously send a protocol data unit PDU on different types of uplink carriers, the different types of uplink carriers have different operating bands, and the method comprises:
determining a first type of an uplink carrier carrying a physical uplink control channel PUCCH, wherein the different types comprise the first type and a second type; and
sending the PDU on an uplink carrier of the first type, and skipping sending the PDU on an uplink carrier of the second type.

2. The method according to claim 1, wherein the uplink carrier of the first type is a normal uplink NUL carrier, and the uplink carrier of the second type is a supplementary uplink SUL carrier.

3. The method according to claim 1, wherein the uplink carrier of the first type is an SUL carrier, and the uplink carrier of the second type is an NUL carrier.

4. The method according to any one of claims 1 to 3, wherein the terminal device comprises a physical PHY layer, and the determining a first type of an uplink carrier carrying a PUCCH comprises:
determining, by the PHY layer, the first type of the uplink carrier carrying the PUCCH.

5. The method according to any one of claims 1 to 4, wherein the terminal device comprises the PHY layer and a media access control MAC layer, and the sending the PDU on an uplink carrier of the first type, and skipping sending the PDU on an uplink carrier of the second type comprises:
generating, by the PHY layer, carrier indication information based on the first type and/or the second type, wherein the carrier indication information indicates not to send the PDU on the uplink carrier of the second type;
sending, by the PHY layer, the carrier indication information to the MAC layer;
receiving, by the PHY layer, uplink scheduling information sent by a network device;
sending, by the PHY layer, the uplink scheduling information to the MAC layer; and
sending, by the MAC layer, the PDU on the uplink carrier of the first type based on the carrier indication information and the uplink scheduling information, and skipping sending the PDU on the uplink carrier of the second type based on the carrier indication information and the uplink scheduling information.

6. The method according to claim 5, wherein the sending, at the MAC layer, the PDU on the uplink carrier of the first type based on the carrier indication information and the uplink scheduling information, and skipping sending the PDU on the uplink carrier of the second type based on the carrier indication information and the uplink scheduling information comprises:
if it is determined, at the MAC layer based on the uplink scheduling information, to schedule the uplink carrier of the second type, sending a padding data packet on the uplink carrier of the second type based on the carrier indication information; and/or
if it is determined, at the MAC layer based on the uplink scheduling information, to schedule the uplink carrier of the first type, sending the PDU on the uplink carrier of the first type based on the carrier indication information.

7. The method according to claim 5, wherein the carrier indication information further indicates to send the PDU on the uplink carrier of the first type.

8. The method according to any one of claims 1 to 4, wherein the terminal device comprises the PHY layer and a MAC layer, and the sending the PDU on an uplink carrier of the first type, and skipping sending the PDU on an uplink carrier of the second type comprises:
receiving, by the PHY layer, uplink scheduling information sent by a network device;
parsing, by the PHY layer, the uplink scheduling information, to obtain target uplink scheduling information for the uplink carrier of the first type;
sending, by the PHY layer, the target uplink scheduling information to the MAC layer; and
sending, by the MAC layer, the PDU on the uplink carrier of the first type based on the target uplink scheduling information.

9. The method according to any one of claims 1 to 8, wherein the terminal device comprises a phase lock loop PLL.

10. The method according to any one of claims 1 to 8, wherein the terminal device comprises at least one subscriber identity module SIM card, and each SIM card corresponds to one available data sending channel or one available PLL.

11. The method according to any one of claims 1 to 10, wherein before the determining a first type of an uplink carrier carrying a PUCCH, the method further comprises:
sending data to the network device in a downlink slot of a first carrier by using an SUL carrier, wherein an operating band of the first carrier is higher than an operating band of the SUL carrier.

12. A terminal device, wherein the terminal device comprises a processor, the processor is configured to: be coupled to a memory, read instructions in the memory, and enable, based on the instructions, the terminal device to perform the method according to any one of claims 1 to 11.

13. A computer-readable storage medium, wherein the computer-readable storage medium stores computer instructions, and when the computer instructions are run on an electronic device, the electronic device is enabled to perform the method according to any one of claims 1 to 11.

14. A computer program product comprising instructions, wherein when the computer program product runs on a terminal, the terminal is enabled to perform the method according to any one of claims 1 to 11.
